# EUROPEAN PATENT SPECIFICATION

(11) **EP 0 353 079 B1**
(45) Date of publication and mention of the grant of the patent: **15.04.1998**
(21) Application number: 89307678.6
(22) Date of filing: 27.07.1989
(51) Int. Cl.: G06F 11/14, G06F 9/44

(54) **Queue-based inter-process communications system for digital data processing system**
Auf Warteschlangen basiertes Interprozess-Kommunikationssystem für ein digitales Datenverarbeitungssystem
Système de communication entre des processus basé sur des files d'attente pour un système numérique de traitement de données

(30) Priority: 29.07.1988 US 226254
(43) Date of publication of application: 31.01.1990
(73) Proprietor: DIGITAL EQUIPMENT CORPORATION, Maynard Massachusetts 01754-1418 (US)
(72) Inventor: Mann, Bruce, Mason New Hampshire 03048 (US); Rosen, Michael, Wilton New Hampshire 03086 (US); Baradine, Pamela M., Hudson New Hampshire (US)
(74) Representative: Goodman, Christopher

(56) References cited:
- IEEE TRANSACTIONS ON COMPUTERS. vol. C-36, no. 8, August 1987, NEW YORK US pages 976 - 987; YANN-HANG LEE ET AL.: 'Progressive Transaction Recovery in Distributed DB/DC Systems '

## Description

The invention relates generally to the field of digital data processing systems, and more particularly to systems for facilitating communications among processes in a digital data processing system.

A digital data processing system, or computer system, executes programs in the context of processes. Typically, "program" is used to identify the instructions that are executed by the computer system, and "process" is a broader term used to also identify the data and state information that indicates the state of the system while the instructions are being executed. A process is typically provided with its own virtual address space, and essentially forms an atomic unit of execution within the system.

Under many circumstances, a process may need to transmit information to another process, which may be either on the same computer or on another computer in a distributed computing environment. The information may constitute a message that enables the other process to perform a service for the process transmitting the message, or it may be the results of processing which may be required by the recipient in connection with its processing. Alternatively, the information may constitute a message being transmitted from one user to another, in, for example, an electronic mail environment.

Computer systems include operating systems, which manage processing of processes and computer system resources for the processes. Typical operating systems provide at least one, and in some cases several, interprocess communication mechanisms. Some communications mechanisms make use of shared areas of the processes' virtual address spaces or shared files and synchronization flags. When a process needs to transmit a message to another process, it loads it into the shared area or file and conditions flags to indicate the presence of a new message. The intended recipient can learn of the message by testing the condition of the flags and retrieve the message.

In another communications mechanism, the operating system provides a mailbox associated with each process that requires communications. When a process needs to transmit a message to another process, it loads it into the intended recipient's mailbox. The mailbox forms a queue from which the receiving process removes the messages in the order in which they were loaded.

IEEE Transactions on Computers C-36 (1987), No. 8; Yann-Hang Lee et al: "Progressive Transaction Recovery in Distributed DB/DC Systems" describes a store and forward operation between sub-systems to save transaction messages issued during database updates and communicated between the sub-systems using shared queues.

### SUMMARY OF THE INVENTION

The invention provides a new and improved information transfer apparatus and method as recited in claims 1 and 2 respectively which facilitates communications among processes operating in a digital data processing system.

In brief summary, the information transfer system transfers stimuli among processes, each stimulus having an associated transaction identification value. The information transfer system includes a stimulus store and a store manager. The stimulus store includes a plurality of storage entries, with each entry receiving a stimulus. The store manager controls storage of the stimulus in the stimulus store in response to the transaction identification value accompanying the stimulus.

To enable a process to transfer stimuli to, or receive stimuli from, the information transfer system, the process first performs a registration operation. If the process has previously used the information transfer system and has not performed a de-registration operation, the store manager notifies the process of the last stimulus it received from, or transferred to, the process.

The new information transfer system ensures that a stimulus is delivered and processed in the event of a malfunction in either the stimulus client or the response client. With respect to stimuli received from a stimulus client, the information transfer system ensures that stimuli are not lost or duplicated. Since the information transfer system maintains the last stimulus from a stimulus client, if a stimulus client attempts to register with the information transfer system without having de-registered, the information transfer system transmits to the stimulus client the last stimulus it received from the stimulus client. As a result, the stimulus client can take corrective action. Furthermore, the information transfer system requires the stimuli from each stimulus client to be in order, if it receives a stimulus out of order, the information transfer system informs the stimulus client of the error.

The information transfer system provides a similar benefit in connection with the response clients if they register without previously having de-registered. In addition, the information transfer system also determines the status of processing of each of the stimuli transferred to a response client based on dequeue requests from each response client, thereby minimizing the communications required between the information transfer system and the response clients.

### BRIEF DESCRIPTION OF THE DRAWINGS

This invention is pointed out with particularity in the appended claims. The above and further advantages of this invention may be better understood by referring to the following description taken in conjunction with the accompanying drawings, in which:
Fig. 1 is a functional block diagram depicting a system, in accordance with the invention, for facilitating communications among processes in a digital data processing system;
Figs. 2A through 2C contain flow diagrams illustrating the operations of the system depicted in Fig. 1.

### DETAILED DESCRIPTION OF AN ILLUSTRATIVE EMBODIMENT

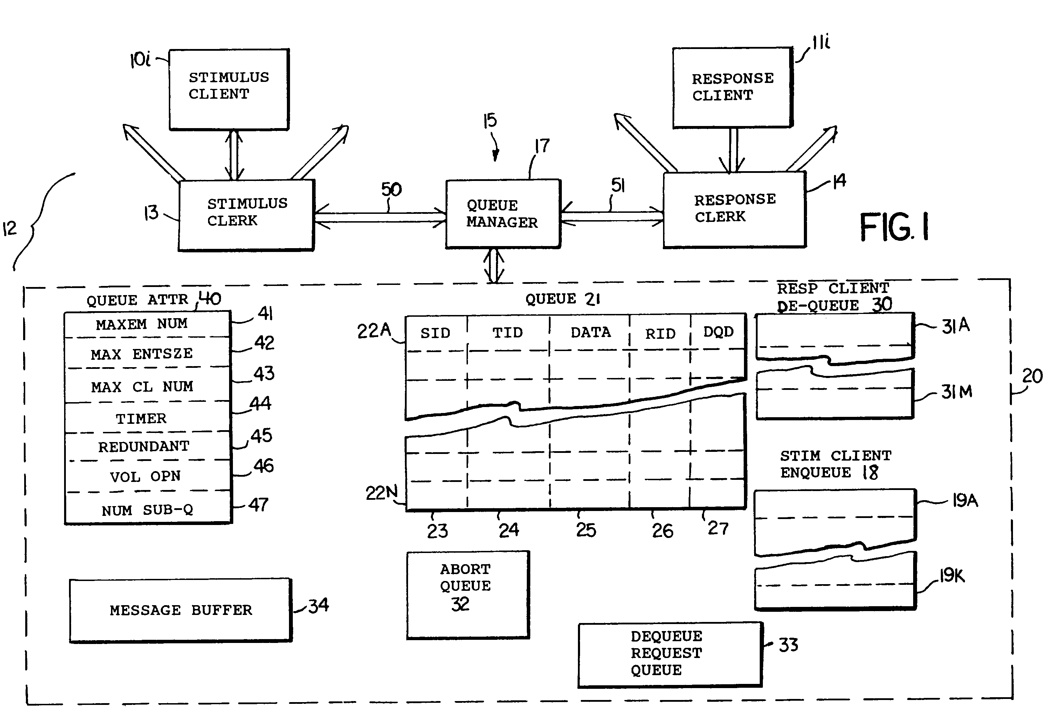

Fig. 1 is a functional block diagram of a communications system for facilitating communications among processes, identified as "clients", in a digital data processing system. With reference to Fig. 1, communications proceeds from one or more processes, identified as stimulus clients 10i, to one or more processes, identified as response clients 11i, through an information transfer system 12. The stimulus clients 10i sequentially generate requests in the form of "stimuli" that they transfer to the information transfer system 12. The response clients 11i obtain requests from the information transfer system 12 and process them.

The information transfer system 12 includes one or more stimulus clerks 13 which communicate with a queueing system 15 over a communications link 50, one or more response clerks 14 which communicate with the queuing system 15 over a communications link 51. The queuing system 15 includes a queue manager 17 and one or more queues 21 in a queue database 20. The queue database 20 further includes a queue attribute list 40 associated with each queue 21, a stimulus client enqueue list 18, a response client dequeue list 30, an abort queue 32, a dequeue request queue 33, and a message buffer 34, which are used as described below.

The queues 21 store stimuli that are being transferred from a stimulus client 10i to a response client 11i. Each queue 21 (one is shown in Fig. 1) includes a plurality of entries 22A through 22N (generally identified by reference numeral 22). Each entry 22 includes a data field 25 that receives the stimulus information that is being transferred. A source identification field 23 in each entry 22 receives the identification of the stimulus client 10i that generated the stimulus data in field 25, and a transaction identification field 24 receives a transaction identification value from the stimulus client 10i. The transaction identification value uniquely identifies the stimulus in a series of stimuli transmitted by the stimulus client 10i to the information transfer system 12 for transfer. Each entry 22 in the queue 21 also includes a response client identification field 26, whose contents identifies the response client 11i that receives the stimulus defined by the data in the data field 25, and a dequeued flag 27 that indicates whether a response client 11i has received the stimulus.

The queue attribute list 40, which is established by a system manager to enable the queue manager 17 to establish the associated queue 21, defines selected attributes of the associated queue 21. In particular, the queue attribute list 40 provides information as to the entries comprising the queue 21, as well as housekeeping information with respect to the queue 21.

The queue attribute list 40 includes a maximum entry number field 41, which identifies the maximum number of entries 22 in the queue 21, a maximum entry size field 42, which identifies the maximum size of each entry 22, effectively defining the maximum size of the data field 25 in the entries 22, and a field 47 which identifies a number of subqueues into which the queue 21 may be divided, and the number of entries 22 in each subqueue. In particular, the entries 22 in queue 21 may be divided into a plurality of subqueues according to relative priority, stimulus type, and so forth. If the subqueues provide differing priority levels, a stimulus client 10i may identify a priority level. If the response clients 11i are divided into groups which provide different types of processing services, the subqueues may be associated with the various types, and a stimulus received from a stimulus client 10i will be enqueued into the subqueue associated with the stimulus' stimulus type.

The queue attribute list 40 also includes several housekeeping fields. A maximum client number field 43 that identifies the maximum number of stimulus clients 10i and response clients 11i that can communicate through the queue 21. A volatile operation flag 46 indicates whether the queue 21 and associated data structures 18, 30, 32 and 33 in the queue database 20 are to be stored in non-volatile memory (not shown) in the computer system. If the queue 21 and associated data structures are not stored in non-volatile memory, a power failure can erase them. If the queue manager 17 is to periodically store, in backup storage such as a disk storage unit in the digital data processing system, the contents of the queue database 20, a timer value in a timer field 44 identifies the period of time to elapse between storage operations

The stimulus client enqueue list 18 includes a plurality of entries 19A through 19K (generally identified by reference numeral 19), each entry 19 being associated with one of the stimulus clients 10i. The queue manager 17, upon receipt of a message containing a stimulus from the stimulus client 10i, stores the stimulus in an entry 22 in the queue 21 and also in the entry 19 associated with the stimulus client 10i to identify the last stimulus received from the stimulus client 10i. It will be appreciated that the stimulus client enqueue list 18 provides redundant information, as the queue manager 17 can identify the last stimulus received from a stimulus client 10i by searching the queue 21, but the stimulus client enqueue list 18 can simplify identification of the last stimulus from a stimulus client 10i, particularly if the queue 21 is long.

The response client dequeue list 30 also includes a plurality of entries 31A through 31M, each entry 31 being associated with one of the response clients 11i. The queue manager, upon transfer of a stimulus from the queue 21 to a response client 11i copies the stimulus into the response client dequeue list 30.

The information transfer system 12 ensures that communications between the stimulus clients 10i and response client 11i proceeds without loss of stimuli in the event of a malfunction of either the stimulus clients 10i or the response clients 11i. A communications session through the information transfer system 12 proceeds in three phases, namely, a registration phase, a stimuli transfer phase, and a de-registration phase.

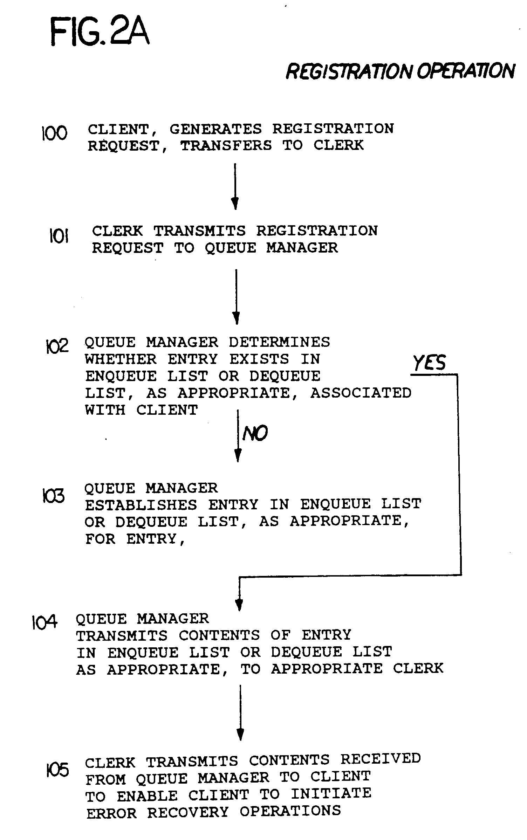

In the registration phase, which is generally depicted in the flow diagram in Fig. 2A, a registering stimulus client 10i, through the stimulus clerk 13, transmits a registration request to the queue manager 17 (steps 100 and 101), which effectively serves to identify the stimulus client 10i to the information transfer system 12. The queue manager 17 determines whether the stimulus client enqueue list 18 includes an entry 19 associated with the registering stimulus client 10i (step 102). If the queue manager 17 determines in step 102 that no entry 19 exists in the appropriate stimulus client enqueue list 18, the queue manager 17 establishes an entry 19, which is thereafter associated with the stimulus client 10i (step 103).

On the other hand, if the queue manager 17 in step 102 determines that the stimulus client enqueue list 18 contains an entry 19 associated with the stimulus client 10i which generated the registration request, the stimulus client 10i is registering without having previously de-registered, which indicates a failure or malfunction in connection with the stimulus client 10i. The queue manager 17 thereupon transmits the contents of the entry 19 associated with the stimulus client 10i which identifies the last proper stimulus received from the stimulus client 10i, enabling it to take corrective action (steps 104 and 105).

Similarly, in a registration operation in connection with a response client 11i, the registering response client 11i, through the response clerk 14, transmits a registration request to the queue manager 17, which effectively serves to identify the response client 11i to the information transfer system 12 (steps 100 and 101). The queue manager 17 determines whether the response client dequeue list 30 includes an entry 31 associated with the registering response client 11i (step 102). If the queue manager 17 determines in step 102 that no entry 31 exists in the response client dequeue list 31, the queue manager 17 establishes an entry 31, which is thereafter associated with the response client 11i (step 103).

On the other hand, if the queue manager 17 determines in step 102 that the response client dequeue list 30 contains an entry 31 associated with the response client 11i which generated the registration request, the response client 11i is registering without having previously deregistered, which indicates a failure in connection with the response client 11i. The queue manager 17 thereupon transmits the contents of the entry 31 associated with the response client 11i, thereby identifying the last stimulus transmitted to the response client 11i and enabling it to take corrective action (steps 104 and 105).

During the de-registration phase, in response to a de-registration request from a stimulus client 10i, the stimulus clerk 13 generates a de-registration message that it transmits over the communications link 50 to the queue manager 17. The queue manager 17 thereafter eliminates entry 19 associated with the stimulus client 10i in the stimulus client enqueue list 18. Similarly, in response to a de-registration request from a response client 11i, the response clerk 14 generates a de-registration message that it transmits over the communications link 51 to the queue manager 17. The queue manager 17 thereafter eliminates the entry 31 associated with the response client 11i in the response client dequeue list 30. In addition, the queue manager 17 may transmit any messages for the response client 11i contained in the message buffer 34 to the response clerk 14 for transfer to the response client 11i.

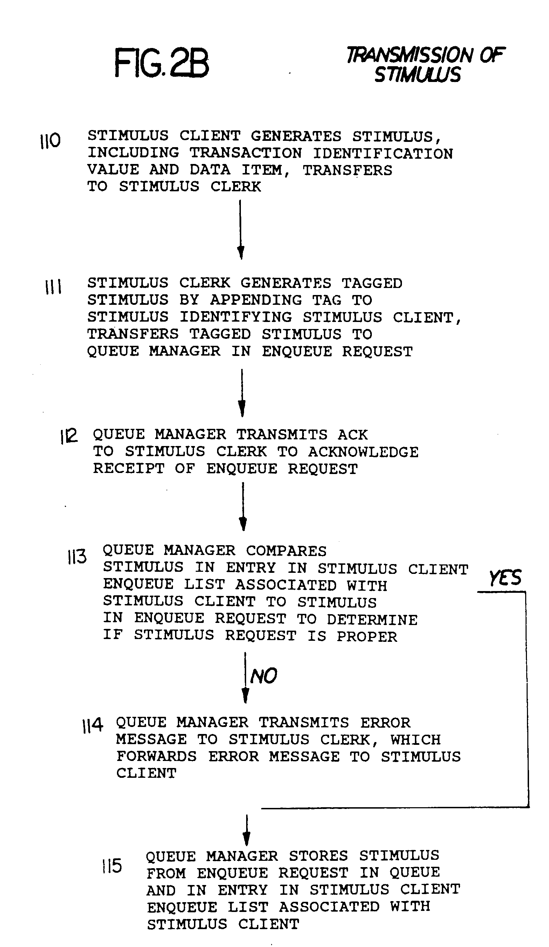

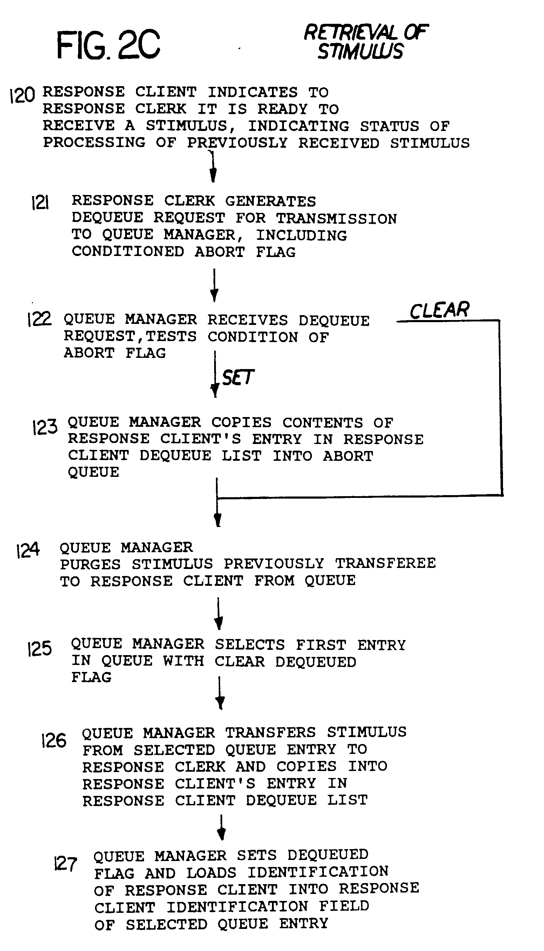

After a stimulus client 10i or a response client 11i has performed a registration operation, and before it has performed a de-registration operation, in connection with the information transfer system 12, it may transmit, in the case of a stimulus client 10i, or retrieve, in the case of a response client 11i, stimuli through the information transfer system. Fig. 2B generally depicts operations in connection with transmission of a stimulus, and Fig. 2C generally depicts operations in connection with retrieval of a stimulus.

With reference to Fig. 2B, initially, the stimulus clerk 13 receives a stimulus from a stimulus client 10i (step 110). Each stimulus includes a transaction identification value and a data item. The transaction identification value is a sequentially-incremented value that uniquely identifies each stimulus in a series of sequential stimuli provided by the stimulus client 10i. The data item of the stimulus represents the information to be transferred to a response client 11i, identifying, for example, an operation to be performed by the receiving response client 11i.

Upon receipt of each stimulus from a stimulus client 10i, the stimulus clerk 13 appends a tag to generate a tagged stimulus, the tag identifying the stimulus client 10i that provided the stimulus. The stimulus clerk 13 then transmits the tagged stimulus as an enqueue request over a communications link 50 to the queuing system 15, and, specifically, to the queue manager 17 (step 111).

In response to the receipt of an enqueue request from the stimulus clerk 13, the queue manager 17 first returns, over communications link 50, an acknowledgement message to the stimulus clerk 13 to acknowledge the receipt of the enqueue request (step 112). After acknowledging receipt of the enqueue request, the queue manager 17 determines whether the stimulus contained in the enqueue request is proper (step 113). In that operation, the queue manager 17 compares the stimulus to the contents of the entry 19 in the stimulus client enqueue list 18 associated with the stimulus client 10i which provided the stimulus in the enqueue request. The entry 19 associated with the stimulus client 10i in the stimulus client enqueue list 18 contains the most recent properly-received stimulus from the stimulus client 10i that was enqueued in the queue 21. Furthermore, as described above, the transaction identification values of the sequential stimuli from each stimulus client 10i comprise sequential values. Accordingly, upon receipt of an enqueue request, the queue manager 17 compares the transaction identification value in the stimulus in the enqueue request to the transaction identification value of the stimulus contained in the entry 19 associated with the stimulus client 10i which generated the stimulus contained in the enqueue request to determine whether they are sequential. If they are not sequential, the queue manager 17 transmits an error message to the stimulus clerk 13 so indicating (step 114).

If, on the other hand, the queue manager 17 determines, in step 113, that the stimulus in the enqueue request from the stimulus clerk 13 is the next in series from the stimulus client 10i, the queue manager 17 stores the tagged stimulus in the queue 21 in the queue database 20, and, specifically, in the last entry 22N in the queue, which constitutes the tail of the queue (step 115). In storing the tagged stimulus from the enqueue request in the tail entry 22N of queue 21, the queue manager 17 stores the tag portion of the tagged stimulus in the source identification field 23 to identify the stimulus client 10i that provided the stimulus, the transaction identification value provided by the stimulus client 10i in the transaction identification field 24, and the data item from the stimulus in the data field 25.

In addition, the queue manager 17 stores the stimulus, that is, the portion of the tagged stimulus comprising the transaction identification value and the data item, in the entry 19 of stimulus client enqueue list 18 associated with the stimulus client 10i identified by the source identification in the tagged stimulus (step 115). Thus, if the stimulus client 10i malfunctions and at some time later performs a subsequent registration operation, the queue manager 17 transmits to the stimulus client 10i the contents of the entry 19 in the stimulus client enqueue list 18 that is associated therewith. The stimulus client 10i may then perform an error recovery operation to attempt to overcome errors resulting from the malfunction.

The queue 21 stores tagged stimuli until they are retrieved by the response clerk 14 for transfer to a response client 11i. As noted above, Fig. 2C depicts operations in connection with retrieval of stimuli. With reference to Fig. 2C, upon receipt of a dequeue request over communications link 51 from the response clerk 14, which it generates when a response client 11i is prepared to process a stimulus (steps 120 and 121), the queuing system 15, specifically, the queue manager 17, dequeues a stimulus from the queue 21 and provides the dequeued stimulus to the response client 11i.

A dequeue request from the response clerk 14 on behalf of a response client 11i includes an abort flag, which provides status information in connection with processing of the stimulus previously transmitted to the response client 11i. Upon receipt of a dequeue request, the queue manager 17 tests the condition of the abort flag (step 122). The receipt of the dequeue request inferentially indicates successful completion of processing of the stimulus previously dequeued by that response client 11i. If the queue manager 17 determines that the abort flag is set, the response client 11i has aborted processing of the stimulus. The queue manager 17 then copies the stimulus from the entry 31 associated with the response client 11i in the response client dequeue list 30 into the abort queue 32 (step 123). The queue manager 17 may then transmit the stimulus to another response client 11i in response to a dequeue request therefrom, or may alternatively transmit a message to the stimulus clerk 13 over communications link 50 indicating that processing of the stimulus has been aborted.

Following step 122, if the queue manager 17 determines that the abort flag in the dequeue request is clear, or following step 123, the queue manager 17 searches the entries 22 in the queue 21, beginning with the entry 22A at the head and proceeding toward the entry 22N at the tail of the queue 21, to locate the entry 22 whose response client identification field 26 contains the identification of the response client to receive the dequeued stimulus, and purges the contents of the entry 22 (step 124). The purging of the contents of the entry 22 indicates that the stimulus represented thereby has been successfully processed or, if the stimulus is in the abort queue 32, that processing of the stimulus has been aborted. It will be appreciated that, upon purging of an entry 22, the contents of the succeeding entries 22 in the queue 21 move up by one entry 22 to fill in the purged entry 22.

In addition, the queue manager 17 searches through the subsequent entries 22 in the queue 21 to locate the first entry 22 in the queue 21 whose dequeued flag 27 is clear (step 125). If the dequeued flag 27 of an entry is set, the stimulus in the entry 22 has been transferred to a response client 11i. On the other hand, if the dequeued flag 27 of an entry 21 is clear, the stimulus in the entry 22 has not been transferred to the response clerk 14, and, specifically, to a response client 11i. If the queue manager 17 locates an entry 22 whose dequeued flag 27 is clear, it retrieves the stimulus from the entry and transmits it to the response clerk 14 over communications link 51 (step 126). The response clerk 14, in turn, forwards the stimulus to the response client 11i for processing. If, on the other hand, the queue manager 17 determines that no entries 22 have clear dequeued flags 27, it may queue the dequeue request in the dequeue request queue 33 for processing when another stimulus is received from the stimulus clerk 13. Contemporaneous with the retrieval of a stimulus from an entry 22, the queue manager 17 stores a copy of the dequeued stimulus in the entry 31 in the response client dequeue list 30 associated with the response client 11i to receive the dequeued stimulus (step 126).

In addition, the queue manager 17 loads the identification of the response client 11i to receive the stimulus in the response client identification field 26 and sets the dequeued flag 27 to indicate that it has been dequeued so that, during processing of a subsequent dequeue request, the queue manager 17 does not dequeue the entry and transmit it to a response client 11i a second time (step 127). It will be appreciated that the queuing system 15 may also include a timing mechanism (not shown) which enables the queue manager 17 to generate an interrogation request to a response client 11i if a predetermined time has elapsed since the last dequeue request from the response clerk 14 on behalf of the response client 11i. If the response client 11i does not respond to the interrogation request, the response client 11i may be deemed inoperative and the stimulus from queue 21 which was directed to that response client 11i may be directed to another response client 11i for processing.

It will be appreciated that, processes being processed by the digital data processing system may operate both as a stimulus client 10i and as a response client 11i. This may occur if a process operating as a response client 11i may, as a result of processing a stimulus, need to transmit a response to the process that, operating as a stimulus client 10i, generated the stimulus. However, in transferring stimuli through queue 21 in the queuing system 15, the stimuli are not directed to any particular response client 11i. Stimuli are received by response clients 11i from queue 21 in response to their respective abilities to process them. However, since stimuli are not directed through queue 21 to any particular response clients 11i, the queuing system 15 includes a message buffer which enables a stimulus client 10i to transmit a message to a particular response client 11i.

The message buffer 34 may comprise a conventional buffer, in which the queue manager 17 stores messages from stimulus clients 10i, received from the stimulus clerk 13 over communications link 50, before transmitting them over communications link 51 to the response clerk for transfer to the response client 11i that is the intended recipient.

Alternatively, the message buffer may comprise data structures similar to queue 21, stimulus client enqueue list 18, response client dequeue list 30, abort queue 32 and dequeue request queue 33, associated with each response client 11i which may receive a message. If the message buffer 34 includes such structures, the queue manager 17 may ensure transfer of messages to the response clients 11i in the presence of failures or malfunctions of the stimulus clients 10i and response clients 11i.

It will be appreciated that, if the queue 21 is divided into subqueues, as identified by the field 47 in the queue attribute list 40, the operations performed by the queue manager 17 will be modified to identify a subqueue into which a stimulus will be enqueued, in response to the receipt of an enqueue request from the stimulus clerk 13, or to identify a subqueue from which a stimulus will be retrieved for transmission to the response clerk 14, in response to the receipt of a dequeue request from the response clerk 14. For example, if subqueues are organized according to priority level, the stimulus in the enqueue request from the stimulus clerk 13 will identify a priority level, and the queue manager 17 will store the stimulus in the tail of the subqueue associated with that priority level. In response to dequeue requests from the response clerk 14, the queue manager 17 may retrieve the stimuli from the various subqueues at rates reflecting the respective priority levels.

Similarly, if the subqueues are based on varying types of stimuli, the queue manager 17, upon receipt of an enqueue request, determines the type of stimulus contained in the enqueue request, and stores the stimulus in the associated subqueue. In response to a dequeue request, the queue manager 17 determines, either from the dequeue request or from a type list (not shown) in the queue database 20, the types of stimuli that the response client 11i, on behalf of which the response clerk 14 generated the dequeue request, can process, and retrieves a stimulus from that subqueue for transmission to the response clerk 14.

As described above, the entries 19 in the stimulus client enqueue list 18 and the entries 31 in the response client dequeue list 30 contain copies of the last stimulus received from each stimulus client 10i and of the last stimulus retrieved on behalf of each response client 11i. It will be appreciated that the lists 18 and 30 can, instead, contain pointers to the entries 22 of queue 21 which contain the respective stimuli. In that case, the queue manager 17 will adjust the pointer in the entry 19 of list 18 associated with a stimulus client 10i when an enqueue request is received from the stimulus clerk 13 on behalf of the stimulus client 10i. In addition, the queue manager will adjust the pointers in the entries 19 and 31 in lists 18 and 30 as the stimuli are purged from the queue 21 (step 124, Fig. 2C) and the contents of subsequent entries are moved up in the queue 21, upon receipt of a dequeue request from the response clerk 17. Further, upon receipt of a dequeue request from the response clerk 14 on behalf of a response client 11i, the queue manager 17 uses the contents of the pointer in the response client's entry 31 in the response client dequeue list 30 to identify the entry 22 containing the stimulus previously provided to the response client 11i, rather than sequencing through the entries 22 in steps 123 and 124 (Fig. 2C) to locate the stimulus previously provided to the response client 11i.

The information transfer system 12 provides a number of advantages. First, it enables a plurality of stimulus clients 10i to request services from a plurality of response clients 11i, while facilitating balancing of the loads on the response clients 11i. Since all of the response clients 11i retrieve stimuli from the single queue 21 in queuing system 15 when they are ready to perform a new processing task, they are always kept busy while the queue 21 contains unretrieved stimuli to transfer to them. In addition, since the response clients 11i retrieve stimuli when they are ready to perform a new processing task, the stimuli do not queue up at any individual response client 11i while others may be idle.

Furthermore, the new information transfer system 12 ensures that a stimulus is delivered and processed in the event of a malfunction in either a stimulus client 10i or a response client 11i. With respect to stimuli received from a stimulus client 10i, the information transfer system 12, based on the sequential transaction tag values in the stimuli from an individual stimulus client 10i, ensures that stimuli are not lost or duplicated. Since the information transfer system 12 maintains the last stimulus from a stimulus client 10i, if a stimulus client 10i attempts to register with the information transfer system 12 without having de-registered, the information transfer system 12 transmits to the stimulus client 10i the last stimulus it received from the stimulus client. As a result, the stimulus client 10i can take corrective action.

The information transfer system 12 provides a similar benefit in connection with the response clients 11i if they register without previously having de-registered. In addition, the information transfer system 12 also determines the status of processing of each of the stimuli transferred to a response client 11i based on dequeue requests from each response client 11i, thereby minimizing the communications required between the information transfer system 12 and the response clients 11i.

The foregoing description has been limited to a specific embodiment of this invention. It will be apparent, however, that variations and modifications may be made to the invention, with the attainment of some or all of the advantages of the invention. Therefore, it is the object of the appended claim to cover all such variations and modifications as come within the scope of the invention as defined in the appended claim.

## Claims

1. An information transfer system (12) for transferring a plurality of information items (25) including sending a registration process signal to a host system (11i) from a client process (10i), each one of the information items (25) having an associated transaction identification value (24), the system comprising :
means (17) in the host system to determine if said client process is in a list (18);
an information item store (20), the information item store having a plurality of storage entries (22A..22N), each one of the plurality of storage entries being receptive to receiving an information item (25);
said information item store (20,21) comprising :
a registration identification field (19,23) containing an identification of said client process ;
a transaction identification field (24) corresponding to a transaction identification value which uniquely identifies the corresponding client process requests or reply; and
a data field (25) containing information to be transferred between said client process and said host system; and
a store manager (17), the store manager controlling storage of the information item (25) in the information item store (21) in response to the transaction identification value (24) associated with and accompanying the information item, wherein said store manager, when said client process (10i) is not in said list (18), indicates that said host system is prepared to receive one or more of said process requests from said client said transaction identification value indicating the type of transaction associated with each client process.

2. A method for maintaining integrity of inter-process communications between processes associated with a plurality of clients and a host system (lli) comprising the steps of:
sending (100,101) a registration process signal to said host system from a client process (10i), said registration process signal representing data and state information of a computer system while computer program instructions are being executed;
determining (102), by said host system, whether said client process is in a list (18); and
storing (103), by said host system in said list (18,21):
a registration identification field (19,23) containing an identification of said client process (10i);
a transaction identification field (24) corresponding to a transaction identification value which uniquely identifies the corresponding client process request or reply;
a data field (25) containing information to be transferred between said client process and said host system; and
storing said transaction identification value (24) associated with said client process (10i) if said client process is not in said list, to indicate that said host system is prepared to receive one or more of said process requests associated with each client process, with said transaction identification value having a value which is different from any value associated with any one of said plurality of clients.

3. The method for maintaining integrity of inter-process communications according to claim 2, wherein said step of storing, by said host system in said list, said transaction identification value (23,24) associated with said client process further comprises the step of:
resending said process request to said host system (11i) if said host system receives a subsequent transaction identification value which is identical to a transaction identification value of a previous process request.

4. The method for maintaining integrity of inter-process communications between processes according to claim 2, wherein said step of storing (103), by said host system in said list, said transaction identification value associated with said client process further comprises the step of:
deleting (124) a previous transaction identification value if said host system received said transaction identification value having a value which is different from said transaction identification value of said previous process request.

## Patentansprüche

1. Informationsübertragungssystem (12) zum Übertragen einer Vielzahl von Informationselementen (25) einschließlich eines Sendens eines Registrierungsprozeß-Signals zu einem Hostsystem (11i) von einem Klientenprozeß (10i), wobei jedes der Informationselemente (25) einen zugehörigen Transaktionsidentifikationswert (24) hat, wobei das System folgendes aufweist:
eine Einrichtung (17) im Hostsystem zum Bestimmen, ob der Klientenprozeß in einer Liste (18) ist;
einen Informationselementenspeicher (20), wobei der Informationselementenspeicher eine Vielzahl von Speicherungseinträgen (22A...22N) hat, wobei jeder der Vielzahl von Speicherungseinträgen zum Empfangen eines Informationselements empfänglich ist;
wobei der Informationselementenspeicher (20, 21) folgendes aufweist:
ein Registrierungsidentifikationsfeld (19, 23), das eine Identifikation des Klientenprozesses enthält;
ein Transaktionsidentifikationsfeld (24), das einem Transaktionsidentifikationswert entspricht, der die entsprechende Klientenanforderung oder -antwort eindeutig identifiziert; und
ein Datenfeld (25), das Informationen enthält, die zwischen dem Klientenprozeß und dem Hostsystem zu übertragen sind; und
einen Speichermanager (17), wobei der Speichermanager eine Speicherung des Informationselements (25) im Informationselementenspeicher (21) in Antwort auf den Transaktionsidentifikationswert (24) steuert, der zum Informationselement gehört und es begleitet, wobei der Speichermanager dann, wenn der Klientenprozeß (10i) nicht in der Liste (18) ist, anzeigt, daß das Hostsystem zum Empfangen einer oder mehrerer Prozeßanforderungen vom Klienten vorbereitet ist, wobei der Transaktionsidentifikationswert den Typ einer zu einem jeweiligen Klientenprozeß gehörenden Transaktion anzeigt.

2. Verfahren zum Aufrechterhalten einer Integrität von Zwischen-Prozeßkommunikationen zwischen Prozessen, die zu einer Vielzahl von Klienten gehören, und einem Hostsystem (11i), das folgende Schritte aufweist:
Senden (100, 101) eines Registrierungsprozeß-Signals zum Hostsystem von einem Klientenprozeß (10i), wobei das Registrierungsprozeß-Signal Daten und Zustandsinformationen eines Computersystems darstellt, während Computerprogrammbefehle ausgeführt werden;
Bestimmen (102), durch das Hostsystem, ob der Klientenprozeß in einer Liste (18) ist; und
Speichern (103), durch das Hostsystem in der Liste (18, 21):
eines Registrierungsidentifikationsfeldes (19, 23), das eine Identifikation des Klientenprozesses (10i) enthält;
eines Transaktionsidentifikationsfeldes (24), das einem Transaktionsidentifikationswert entspricht, der die entsprechende Klientenprozeßanforderung oder -antwort eindeutig identifiziert;
eines Datenfeldes (25), das Informationen enthält, die zwischen dem Klientenprozeß und dem Hostsystem zu übertragen sind; und
Speichern des zum Klientenprozeß (10i) gehörenden Transaktionsidentifikationswertes (24), wenn der Klientenprozeß nicht in der Liste ist, um anzuzeigen, daß das Hostsystem vorbereitet ist, eine oder mehrere zu einem jeweiligen Klientenprozeß gehörenden Prozeßanforderungen zu empfangen, wobei der Transaktionsidentiofikationswert einen Wert hat, der unterschiedlich von irgendeinem zu irgendeinem der Vielzahl von Klienten gehörenden Wert ist.

3. Verfahren zum Aufrechterhalten einer Integrität von Zwischen-Prozeßkommunikationen nach Anspruch 2, wobei der Schritt zum Speichern, durch das Hostsystem in der Liste, des zum Klientenprozeß gehörenden Transaktionsidentifikationswertes (23, 24) weiterhin folgendes aufweist:
erneutes Senden der Prozeßanforderung zum Hostsystem (11i), wenn das Hostsystem einen nachfolgenden Transaktionsidentifikationswert empfängt, der identisch zu einem Transaktionsidentifikationswert einer vorherigen Prozeßanforderung ist.

4. Verfahren zum Aufrechterhalten einer Integrität von Zwischen-Prozeßkommunikationen nach Anspruch 2, wobei der Schritt zum Speichern (103), durch das Hostsystem in der Liste, des zum Klientenprozeß gehörenden Transaktionsidentifikationswertes (23, 24) weiterhin folgendes aufweist:
Löschen (124) eines vorherigen Transaktionsidentifikationswertes, wenn das Hostsystem den Transaktionsidentifikationswert mit einem Wert empfing, der unterschiedlich vom Transaktionsidentifikationswert der vorherigen Prozeßanforderung ist.

## Revendications

1. Système de transfert d'informations (12) pour transférer plusieurs éléments d'informations (25) comprenant l'envoi d'un signal de traitement d'enregistrement à un système hôte (11i) à partir d'un traitement client (10i), chacun des éléments d'informations (25) comportant une valeur d'identification de transaction (24) associée, le système comprenant :
des moyens (17) prévus dans le système hôte pour déterminer si ledit traitement client se trouve dans une liste (18);
une mémoire d'éléments d'informations (20) comportant plusieurs entrées de mémoire (22A...22N dont chacune est adaptée pour recevoir un élément d'information (25);
ladite mémoire d'éléments d'informations (20) comprenant :
une zone d'identification d'enregistrement (19, 23) contenant une identification dudit traitement client;
une zone d'identification de transaction (24) correspondant à une valeur d'identification de transaction qui identifie de manière unique une demande ou une réponse du traitement client correspondant; et
une zone de données (25) contenant des informations destinées à être transférées entre ledit traitement client et ledit système hôte; et
un gestionnaire de mémoire (17) qui commande le stockage de l'élément d'information (25) dans la mémoire d'éléments d'informations (21) en réponse à la valeur d'identification de transaction (24) associée à l'élément d'information et accompagnant celui-ci, ledit gestionnaire de mémoire indiquant, lorsque ledit traitement client (10i) ne se trouve pas dans ladite liste (18), que ledit système hôte est prêt à recevoir une ou plusieurs desdites demandes de traitement à partir dudit client, ladite valeur d'identification de transaction indiquant le type de transaction associée à chaque traitement client.

2. Méthode pour conserver l'intégrité de communications intertraitement entre des traitements associés a de multiples clients et un système hôte (11i), comprenant les étapes qui consistent à :
envoyer (100, 101) un signal de traitement d'enregistrement audit système hôte à partir d'un traitement client (10i), ledit signal de traitement d'enregistrement représentant des données et des informations d'état d'un système d'ordinateur pendant l'exécution d'instructions de programmes d'ordinateur;
déterminer (102), par ledit système hôte, si le traitement client se trouve dans une liste (18); et
stocker (103), par ledite système hôte dans ladite liste (18, 21) :
une zone d'identification d'enregistrement (19, 23) contenant une identification dudit traitement client (10i) ;
une zone d'identification de transaction (24) correspondant à une valeur d'identification de transaction qui identifie de manière unique une demande ou une réponse du traitement client correspondant;
une zone de données (25) contenant des informations destinées à être transférées entre ledit traitement client et ledit système hôte; et
stocker ladite valeur d'identification de transaction (24) associée audit traitement client (10i) si celui-ci ne se trouve pas dans ladite liste, pour indiquer que ledit système hôte est prêt à recevoir une ou plusieurs desdites demandes de traitement associées à chaque traitement client, ladite valeur d'identification de transaction ayant une valeur différente de n'importe quelle valeur associée à l'un quelconque desdits multiples clients.

3. Méthode pour conserver l'intégrité de communications intertraitement selon la revendication 2, suivant laquelle ladite étape de stockage, par ledit système hôte dans ladite liste, de ladite valeur d'identification de transaction (23, 24) associée audit traitement client comprend également l'étape qui consiste à :
renvoyer ladite demande de traitement audit système hôte (11i) si celui-ci reçoit une valeur d'identification de transaction postérieure identique à une valeur d'identification de transaction d'une demande de traitement antérieure.

4. Méthode pour conserver l'intégrité de communications intertraitement entre des traitements selon la revendication 2, suivant laquelle ladite étape de stockage (103), par ledit système hôte dans ladite liste, de ladite valeur d'identification de transaction associée audit traitement client comprend en outre l'étape qui consiste à :
annuler (124) une valeur d'identification de transaction antérieure si ledit système hôte reçoit ladite valeur d'identification de transaction qui a une valeur différente de ladite valeur d'identification de transaction de ladite demande de traitement antérieure.
